# EUROPEAN PATENT APPLICATION

(11) **EP 3 299 296 A1**
(43) Date of publication of application: **28.03.2018**
(21) Application number: 17193598.4
(22) Date of filing: 27.09.2017
(51) Int. Cl.: B64D 45/00, B64C 25/00, B64C 13/16, B60T 7/12, B64C 25/34, B60T 8/17

(54) **AIRCRAFT LANDING DETECTOR**

(30) Priority: 27.09.2016 GB 201616371
(71) Applicant: Airbus Operations Limited, Bristol BS34 7PA (GB)
(72) Inventor: LYNAS, Christopher, Filton, Bristol BS34 7PA (GB); THOMPSON, Robert Ian, Filton, Bristol BS34 7PA (GB)
(74) Representative: EIP

(57) **Abstract**

Ways of determining sustained ground contact of an aircraft are described. In examples herein, sustained ground contact of an aircraft is determined by detecting a change in a mechanical vibration characteristic of a part of the aircraft. Apparatus for determining sustained ground contact of an aircraft may comprise an analyser [300] for analysing aircraft vibration signals and a trigger [310] for triggering occurrence of sustained ground contact to an aircraft control system [315] when the analyser [300] detects sustained ground contact.

## Description

### TECHNICAL FIELD

The present invention relates to aircraft landing and particularly, but not exclusively, to determining when sustained ground contact has occurred, for example, for triggering aircraft retardation functions.

### BACKGROUND

An affirmative aircraft landing event may be determined to have occurred after one or more stages, before an aircraft comes to a halt or continues to taxi under its own power along and/or away from a runway. For example, a landing event may begin when an aircraft is close to the ground and the pilot has visual contact with the runway, followed possibly by initial ground contact with one or more of the aircraft's tyres, then by sustained ground contact and, finally, when weight is increased on the wheels. Each of these stages may need to occur before an affirmative landing event can be determined to have taken place.

It is important to determine accurately when certain stages of an aircraft landing event has or have occurred. This is partly so that aircraft retardation functions can be deployed at an appropriate moment. Retardation functions may include one or more of thrust reversers, ground spoilers, wheel braking and/or lift dumpers, for instance, and may generally be referred to herein as 'braking'. A delay in accurately determining when the certain stages of an aircraft landing event has or have occurred may cause a delay in initiating retardation functions, which may in turn influence the stopping capability and/or distance of the respective aircraft. These factors may influence which airports certain aircraft can access, and/or place weight restrictions on certain aircraft that need to access certain airports, where, for example, the airports have a restricted runway length.

Braking is typically initiated when sustained ground contact has occurred. Momentary ground contact due, for example, to a landing 'bounce', would not qualify as a sustained ground contact for the purposes of deploying retardation functions.

Some known aircraft landing systems are adapted to detect relative movement of certain landing gear elements to establish when sustained ground contact has occurred. Such systems may be referred to as weight-on-wheel (WonW) detection systems using WonW detectors. Known WonW detectors can be adversely impacted in a number of ways. For instance, if one or more elements of the landing gear are not optimally positioned before a landing event, a WonW detector may not be capable of indicating when sustained ground contact has occurred. It is therefore commonplace to deploy secondary measures to establish when sustained ground contact has occurred. Such secondary measures may, for example, detect wheel rotation speed increasing through sustained ground contact, or compression of wheel shock absorbers through increased weight on the wheels, when the tyres touch down. However, such detection may not always be accurate and/or can be delayed. For example, wheel rotation speed may not change quickly if the tyres come into contact with a contaminated, slippery runway, which may for example be contaminated with oil or ice. Further, a 'kiss' landing (a landing with very low rate of descent) may lead to shock absorber compression not occurring instantly or significantly, at least to begin with, even though sustained ground contact has in fact occurred. In these and in other ways accurate determination of sustained ground contact may be delayed.

It is not uncommon, therefore, for an aircraft landing system to deploy a multiplicity of different WonW detectors to give a reliable WonW status, which is determinative of sustained ground contact. Nevertheless, collection and analysis of multiple WonW indications may cause delay in the accurate assessment of when sustained ground contact has occurred.

### SUMMARY

According to a first aspect, the present invention provides a method comprising determining sustained ground contact of an aircraft by detecting a change in a mechanical vibration characteristic of a part of the aircraft.

Optionally, the method comprises triggering a sustained ground contact indicator when sustained ground contact is determined.

Optionally, the part comprises a landing gear assembly element, for example, a bogie beam assembly.

Optionally, the method comprises stimulating vibrations of the part. The part may be stimulated prior to and during a landing event. The part may be stimulated by a vibrator.

Optionally, a vibration transducer detects mechanical vibration characteristics of the part.

Optionally, the method comprises analysing frequency domain characteristics of the mechanical vibration characteristic to determine sustained ground contact.

Optionally, the method comprises analysing time domain characteristics of the mechanical vibration characteristic to determine sustained ground contact.

According to a second aspect, the present invention provides a method of determining sustained ground contact of an aircraft using a method of the first aspect and, in response, deploying aircraft retardation functions.

According to a third aspect, the present invention provides apparatus for determining sustained ground contact of an aircraft, which is arranged to detect a change in a mechanical vibration characteristic of a part of the aircraft.

Optionally, the apparatus comprises a vibration transducer to generate signals representing mechanical vibrations of the part, an analyser to determine from the signals a change in mechanical vibration characteristics and a trigger responsive to an output of the analyser to trigger when a sustained ground contact has occurred.

Optionally, the vibration transducer is fixedly attached to the part and is arranged to produce signals representative of vibrations of the part.

Optionally, the apparatus comprises a vibrator, which is arranged to drive mechanical vibrations of the part.

Optionally, the part comprises a landing gear assembly element. The part may comprise a bogie beam assembly.

A third aspect of the present invention provides an aircraft control system, arranged to determine sustained ground contact of a respective aircraft, the system comprising, or arranged to receive inputs from, at least one apparatus according to the second aspect.

A fourth aspect of the present invention provides an aircraft comprising an apparatus according to the second aspect or a system according to the third aspect.

A fifth aspect of the present invention provides an aircraft arranged to perform a method according to the first aspect.

### BRIEF DESCRIPTION OF THE DRAWINGS

Figure 1 is a schematic diagram of side elevation of a known wing and landing gear assembly;
Figure 2 is a schematic diagram of a bogie beam assembly according to a first example;
Figure 3 is a block diagram of a landing event indicator;
Figure 4 is a block diagram of component of a analyser;
Figure 5 is a schematic diagram of a bogie beam assembly according to a second example;
Figure 6 is a pictorial representation of front and side elevations of an aircraft and associated landing gear assemblies; and
Figure 7 is a flow diagram showing steps in determining a change in mechanical vibration characteristics of a part of an aircraft in determining a landing event; and
Figure 8 is a flow diagram showing steps in inferring a landing event and deploying aircraft retardation functions.

### DETAILED DESCRIPTION

The following disclosure relates to apparatus and processes for aircraft landing event detection.

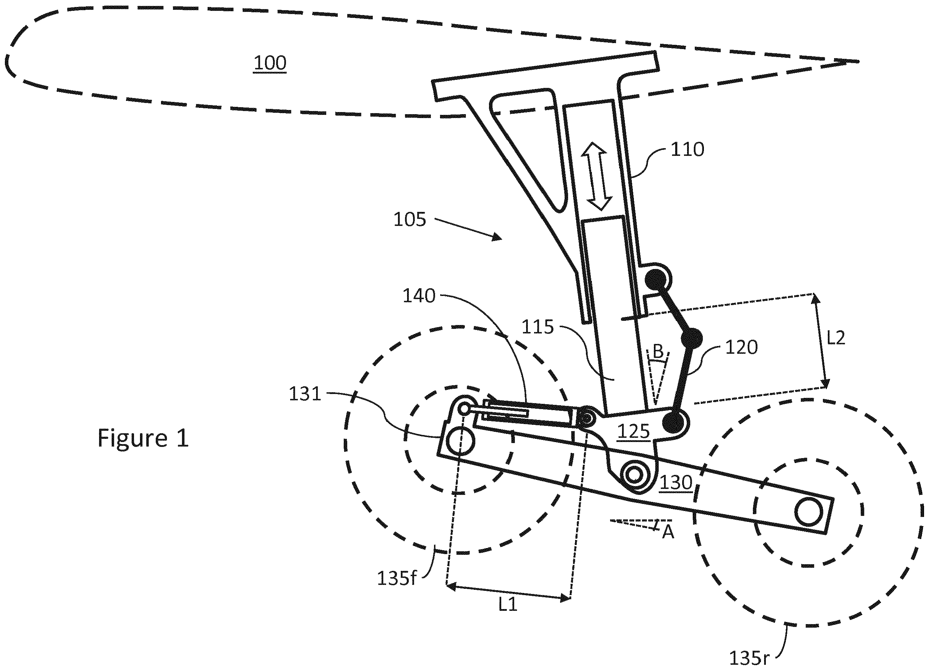

Figure 1 illustrates in simplified terms an aircraft wing section 100 and major elements of an exemplary landing gear arrangement. The landing gear arrangement generally comprises a shock strut 105 (for example, an oleo-pneumatic shock strut) having a main fitting 110 attached to the wing and a slider 115 (or post), which is slidable into the main fitting 110 against the pressure of a fluid or fluids to form a shock absorbing element. A torque link assembly 120 couples the main fitting 110 to a torque link lug structure 125 at a lower end of the slider 115. The torque link lug structure 125 also connects pivotally the shock strut 105 to a bogie beam assembly 130, which supports at least one wheel 135f at the front and at least one wheel 135r at the rear. Typically there are two or more wheels at each end of the bogie beam assembly 130. The torque link lug structure 125 also (in this example) connects a pitch trimmer 140 near to a leading end 131 of the bogie beam assembly.

As can be appreciated from Figure 1, which exemplifies a scenario in which the rear tyres 135r are expected to touch down first, there are a number of WonW references that typically vary when a respective aircraft lands. For example, the angle A, known as the bogie trail angle, between the bogie beam 130 and the horizontal (i.e. parallel with a runway), decreases when the rear tyres 135r touch down onto the runway and approaches zero when the front tyres 135f also touch down. A decrease in the bogie trail angle, A, can be determined and trigger a WonW indication. Other bogie orientations and trail angles can be measured depending on their respective configurations. For example, in other configurations, a bogie may be trimmed so that front tyres 135f are arranged to touch down first or so that all wheels touch down at the same time. In the former case, a decrease in the bogie trail angle may indicate WonW, whereas, in the latter case, a change in the angle between the shock strut and bogie (as the respective aircraft de-rotates as nose landing gear (not shown) approaches the ground) may be used to indicate WonW. More generally, different landing gear configurations may experience similarly useful detectable changes in angle that can be used to determine WonW and/or sustained ground contact. Such indications may not be usable, however, if, for example, the respective bogie is trimmed incorrectly prior to landing.

Referring again to Figure 1, it can be appreciated that as the bogie trail angle A increases, a length L1 of the exemplified pitch trimmer 140 increases. An increase in the length L1 of the pitch trimmer 140 may serve as a WonW indication. If the pitch trimmer were instead to the rear of the strut a corresponding length of the pitch trimmer would reduce as the bogie trail angle A increases. Again, such indications may not be usable if the respective bogie is trimmed incorrectly prior to landing.

After both (individual or sets of) tyres have touched-down, and the weight of the aircraft on the wheels exceeds a breakout force of the shock strut 105, a length L2 associated with the shock strut 105 decreases. A decrease in the length L2 of the shock strut 105 may serve as a WonW indication. If, however, the aircraft experiences a 'kiss' landing, it may take some time after initial sustained ground contact before the length L2 decreases enough to serve as a reliable WonW determination.

Concurrently, as the length L2 of the shock strut 105 decreases, an angle B, referred to as the torque link angle, between the shock strut 105 and torque link 120 assembly, increases. Indeed, any variation in angles formed between the torque link 120 and the shock strut 105, and any other angles between any false links that are present (not shown) and the shock strut 105, may serve to indicate WonW. False links, which may be present, do not perform any structural function, but are there to provide an alternative routing for electrical and hydraulic services to the bogie assembly, for example, for brake control, tyre pressure functions and the like. In addition, duplicated routings provided by false links may be segregated against risks such as tyre burst or bird strike, with one routing strapped to the toque links and an alternative back-up route strapped to the false links. The false links articulate in the same way as the main structural torque links, and an equivalent of the torque link angle, B, also exists on the false links. An increase in the torque link angle, B, can be detected and trigger a WonW indication. Again, a 'kiss' landing may delay a WonW determination.

From Figure 1 it can be seen that there are a number of ways in which WonW detectors may be deployed to provide appropriate WonW indications or determinations. In addition, wheel rotation speed, which increases as the tyres come into contact with the runway, may also be determined to provide a WonW indication. As has been alluded to, however, such an indication may be delayed if the tyres land on a contaminated, slippery runway.

Examples presented herein detect changes in vibration characteristics of a part of an aircraft to determine that sustained ground contact has taken place. As will be described, such an approach may provide an early indication that a sustained ground contact has occurred and provide the potential for the earlier application of some or all retardation functions and a more efficient and/or earlier stopping of an aircraft after landing. Consequently, certain aircraft that deploy the teachings herein may be able to carry heavier loads and/or land on shorter runways than has hitherto been practical.

The teaching herein is founded on the appreciation that certain vibration characteristics of a part of an aircraft change when sustained ground contact occurs and that the change can be detected and used in establishing that sustained ground contact has occurred.

Although the following description considers changes in vibrations associated with a bogie beam assembly, it will be appreciated that other parts of an aircraft will typically experience similar changes in vibration characteristics and that the teaching herein is not limited to bogie beam implementations.

As an aircraft approaches a runway, and the landing gear is deployed (or lowered), the landing gear assembly, including a bogie beam assembly, experiences a significant number of vibration stimulants. Stimulants include airflow around various parts of the assembly, for example, causing pitching, bending and/or torsional stresses. Other vibrations may be due to impacts, for example with birds, rain, ice and/or debris and/or be due to the motion of an airframe structure of the aircraft.

The vibrations exhibit a vibration frequency spectrum, which is influenced by factors such as, for example, the materials that are used in the landing gear assembly and their dimensions. For instance, a bogie beam assembly comprises a relatively large, solid metallic structure, which will tend to have a number of natural resonant frequencies associated with it. These resonant frequencies, which may be stimulated by airflow and/or impact during an approach to a landing event, contribute significantly to the overall vibration frequency spectrum that is detected.

In-flight vibration characteristics generate a vibration frequency spectrum that, while varying due to varying influences, is broadly indicative of a 'flight' rather than a 'landing' status.

Detected vibration characteristics change as soon as initial ground contact is made by at least one tyre. The change may be by way of a shift of some existing and/or natural resonant frequencies, an addition of new frequencies, the suppression of some extant frequencies, or in other ways. For instance, ground contact by a tyre may generate a frequency spike, at a new frequency, which reflects a tyre bounce or a tyre skid (before the wheel rotation speed increases). That may be followed very soon after by relatively low-frequency vibrations, or a 'wheel rumble', caused by wheel rotation, which may for example be influenced by the nature of a runway surface and/or vibrations in a respective axle as it rotates. The characteristics of the vibrations may change as more tyres make ground contact.

Frequency characteristics of a part of the aircraft, such as the bogie beam assembly, may change, for example, as pressure is exerted on the bogie beam as a result of tyre ground contact. Alternatively, or in addition, natural resonant frequencies of a part such as a bogie beam may be suppressed or dampened, as ground contact leads to increased pressure thereon, in a manner somewhat similar to stopping a tuning fork from vibrating by touching the tines.

Accordingly, vibration characteristics and the respective vibration frequency spectrum are expected to be detectably different from the moment at least one tyre makes ground contact. Detecting the difference according to examples herein provides an early indication of ground contact and, in particular, may be used to establish sustained ground contact.

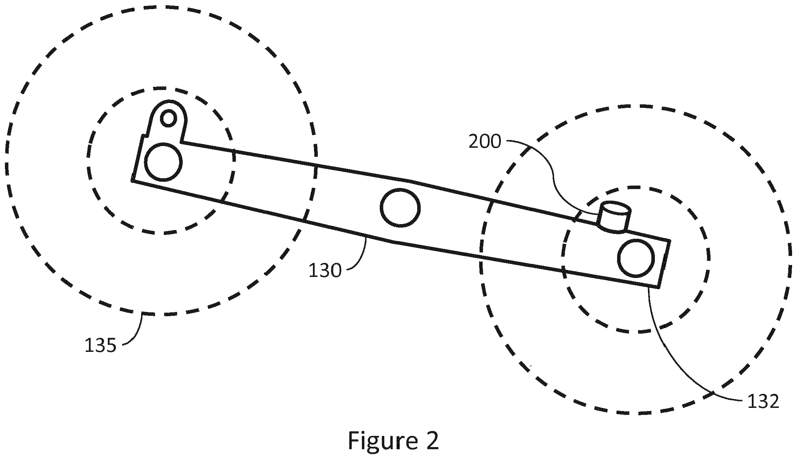

An example of a first kind of ground contact indicator will now be described with reference to Figures 2-4. The exemplary ground contact indicator comprises a vibration transducer 200 attached to a bogie beam. In the example illustrated, the vibration transducer 200 is attached near to a trailing end 132 of a bogie beam assembly 130, which is generally the same as the assembly that is illustrated in Figure 1. The attachment location may be generally as shown or at another point on the bogie beam (or on other part of an aircraft) depending on various design considerations as will be described.

The vibration transducer 200 may be one of various kinds that are capable of converting vibrations into electrical signals. For example, the vibration transducer 200 may be a piezo vibration sensor device of known kind or a MEMS accelerometer of known kind. In any event, the vibration transducer 200 is arranged to couple electrical signals representing vibrations into a analyser.

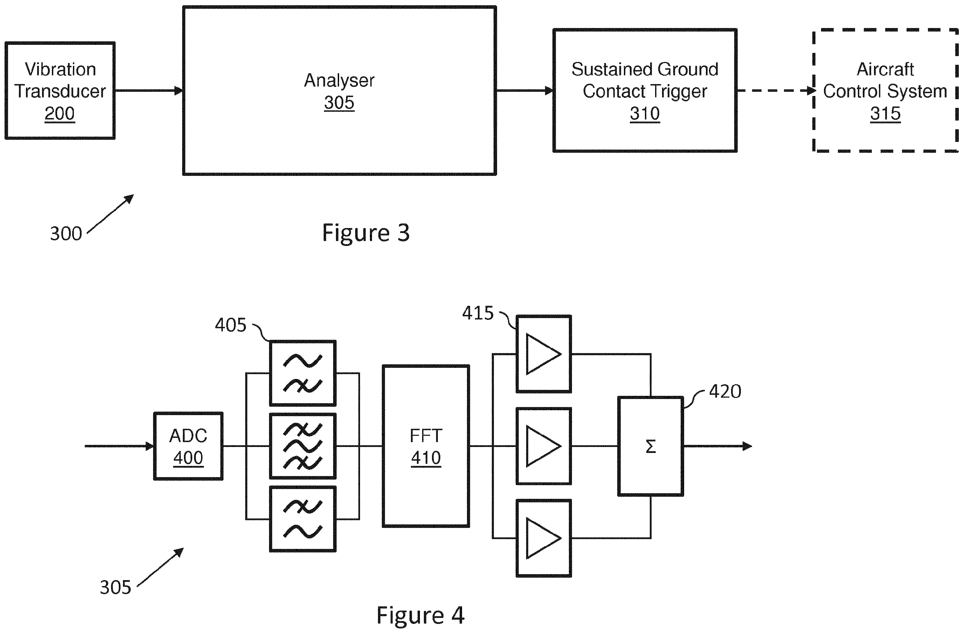

An exemplary sustained ground contact indicator 300 is illustrated schematically in more detail in Figure 3. According to Figure 3, the arrangement comprises a vibration transducer 200, which is communicatively coupled to a analyser 305. The analyser 305 is communicatively coupled to a sustained ground contact trigger 310, which, in turn, is communicatively coupled to an aircraft control system 315. The aircraft control system 315 is not a part of the sustained ground contact indicator 300, is of a generally known kind and is arranged to receive sustained ground contact indications from one or more sources (for example, of the kinds described herein) including the ground contact indicator 300 described herein. The aircraft control system 315 is arranged, as is known, to determine that sustained ground contact has occurred, by reference to one or more indications, in order to control the deployment of appropriate aircraft retardation functions.

Major components of one example of a analyser 305 are illustrated in Figure 4.

The analyser 305 may receive the signals from the vibration transducer 200 directly or via other conditioning circuitry (not shown). The analyser 305 may comprise an analogue-to-digital convertor (ADC) 400 to convert analogue signals from the vibration transducer 200 into digital signals. Alternatively, the conditioning circuitry may provide an ADC function, or the vibration transducer may deliver digital signals. In any event, the analyser 305 may include one or more spectral filter circuits 405 (for example, high-pass, bandpass or low-pass) which are arranged to block or pass vibration signal frequency ranges according to whether the respective frequencies are deemed to be relevant to a subsequent frequency analysis. For example, frequencies due to small object impacts (such as rain, hail or debris) may be filtered out as these could occur during flight or after ground contact occurs.

The analyser 305 may further comprise a circuit to determine the spectral make-up of the signals. A non-limiting example of a suitable circuit 410 is one which determines a Fast Fourier Transform (FFT) to transform time-varying signals into the frequency domain. Downstream of the FFT circuit 410 the analyser comprises one or more threshold circuits 415 to indicate whether selected frequencies or frequency ranges drop below or rise above certain levels, which are associated with sustained ground contact. The threshold circuits 415 feed into an inference circuit 420, which infers from the inputs whether sustained ground contact has taken place. In some examples, the analyser 305 may be a frequency analyser, while, in other examples, the analyser 305 may not be limited to frequency analysis, and may in addition to frequency analyse other factors such as, for example, g-force levels.

The inference circuit 420 may be arranged to make an affirmative sustained ground contact inference based on whether one or more than one (or any elected combination) of the threshold circuits 415 indicate(s) that a certain frequency range has (or ranges have) risen above or fallen below a certain level. The inference circuit 420 may in addition take account of a duration (in the time domain) for which one or more frequency ranges change. This may be useful, for example, to distinguish between momentary ground contact events (such as due to a bounce) and sustained ground contact.

In one example, the inference circuit 420 may be arranged to identify, by reference to the outputs of the threshold circuits 415, that the overall vibration characteristics (for example in one or both of frequency and time domains) have changed by a large enough margin to infer that sustained ground contact has taken place. In this example, any initial filtering by spectral filter circuits 405 may assist by isolating the frequencies that are deemed to be pertinent to detecting sustained ground contact.

In another example, the inference circuit 420 may be arranged to consider changes to specific frequencies, including by increase, decrease, addition and/or removal of certain frequencies, to infer that sustained ground contact has taken place.

In yet another example, the inference circuit 420 may embody a classifier process, for example including a neural network, which is trained to identify when sustained ground contact has taken place. Such classifier processes are known and may be trained by being fed data (either recorded data or real-time sensed data) relating to in-flight and landing modes of vibrational characteristics so that subsequently, in use, it can recognise sustained ground contact. A benefit of using a classifier of this kind is that it is not necessary to be prescriptive about what vibration features constitute a landing event. The classifier is trained using real data and is subsequently able to determine from that training when a landing event takes place.

In a further example, the inference circuit 420 may be arranged to identify a time-varying sequence of predetermined events before inferring that sustained ground contact has taken place. For example, the inference circuit 420 may look for the following sequence of events:
a. a change in a characteristic frequency response of a bogie beam as a result of initial ground contact;
b. addition of a spike frequency input associated with a touchdown of tyres; and
c. addition of a relatively low frequency rumble (and/or harmonics thereof) associated with relative tyre on ground motion.

In this sequence of events, occurrence of events a and/or b alone may not be sufficient because either could be associated with a 'bounce' event after which the aircraft loses ground contact. In that context, event c provides final assurance that any bounce event has passed and that sustained ground contact prevails. Events a and b may occur almost simultaneously whereas event c may occur a fraction of a second later and carry on thereafter. Indeed, events a and/or b may occur more than once before event c occurs, and the inference circuit 420 may be arranged to ignore an occurrence of events a and b until event c occurs as well.

According to examples herein, the analyser 305 performs a sustained ground contact test many times per second based on input vibration transducer signals. Frequent sampling in this manner assures that sustained ground contact is detected quickly and that retardation functions can be deployed as soon as is practicable.

Once the inference circuit 420 makes an affirmative inference, the analyser 305 communicates a respective signal to the sustained ground contact trigger 310, which in turn communicates to the aircraft control system 315 that sustained ground contact has occurred.

The sustained ground contact indicator 300 as illustrated in Figure 3 may be realised in various different ways. The example described performs frequency analysis primarily in the digital domain. An alternative approach would be to perform the analysis partly or wholly in the analogue domain using analogue circuits and filters. Such an approach may provide a more rapid determination of sustained ground contact.

The sustained ground contact indicator 300 may in addition be physically configured in different ways. For instance, the vibration transducer 200, analyser 305 and landing event trigger 310 may be contained in a sealed package, which is fixedly attached to the bogie beam 130. The package may be connected via a wired or a wireless connection to the aircraft control system 315. The term 'wired' is used broadly herein to cover all kinds of physical connections, such as electrical wiring and optical fibre links. Alternatively, the package may be connected via a wired or wireless connection to a data collection hub (not shown) that is associated with the landing gear assembly. For instance, each landing gear assembly or landing gear assembly bay may be associated with a data collection hub, which is arranged to collect data and/or signals from plural sub-systems and sensor arrangements. The data collection hub may be connected via a wired or wireless connection to the aircraft control system 315. Wireless connections may deploy Wi-Fi, Bluetooth, NFC or any other appropriate wireless standard(s) and/or protocol(s).

In an alternative physical configuration, the vibration transducer 200 is separate from the analyser 305 and sustained ground contact trigger 310. The vibration transducer 200 may be packaged and mounted on the bogie beam 130 while the analyser 305 and sustained ground contact trigger 310 may be packaged and secreted away from the bogie beam assembly 130, for example higher up the shock strut 105 or even within the landing gear assembly bay. The two packages may be connected via a wired or wireless connection. An advantage of such an arrangement is that the analyser package may be more protected from the environment and/or other hazards such as bird strikes. Additionally, it may be possible to deploy a passive vibration detector, which does not need to be powered, thereby simplifying the arrangement and possibly reducing cost.

The analyser 305 and/or the sustained ground contact trigger 310 may be realised in different ways. For example, these components may comprise hardware logic circuits, logic chips or programmed hardware (for example programmed in firmware) or, for example, an embedded processor programmed with software. Indeed, the analyser 305 and/or the landing event trigger 310 may be realised using a combination of any one or more of these options. A perceived advantage of a purely or largely digital approach is, for example, an opportunity to make use of standard programmable components, such as FPGAs (Field Programmable Gate Arrays) and the like.

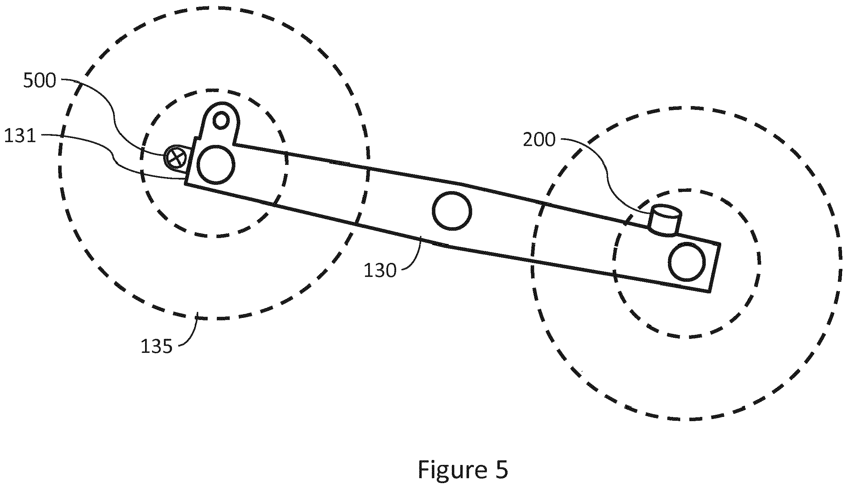

An example of a second kind of landing event indicator will now be described with reference to Figures 5. The arrangement is generally the same as in Figure 2, showing a bogie beam assembly 130 and vibration transducer 200, and includes in addition a vibration stimulator, or vibrator 500. The vibrator 500 may be fixedly attached to the bogie beam assembly 130, for example, near to a leading end 131 of the bogie beam assembly 130. The vibrator 500 may of a known kind and comprise, for example, a buzzer, an impactor, a piezo-electric vibration device or the like, and be arranged to impart mechanical vibrations to the bogie beam assembly 130. When activated, the vibrator 500 drives a vibrational response of the bogie beam assembly 130, such that the vibrations can be detected by the vibration transducer 200. The vibrator 500 may have a frequency that is selected to stimulate significant and/or resonant vibration frequencies of the bogie beam to which it is attached. These vibration frequencies are readily detected by the vibration transducer 200. The vibrations are controlled to have an amplitude that is sufficient to be detected by the vibration transducer 200 but which is not expected to be discernible otherwise.

As has already been explained, vibration characteristics of any appropriate structure, for example as are detectable from a bogie beam assembly, are expected to change detectably as soon as ground contact occurs, which causes a change in the associated vibration characteristics and frequency response of the bogie beam assembly. This in turn is expected to cause a detectable change in the frequency spectrum, which is driven by the vibrator 500 and detected by the vibration transducer 200, which in turn may be inferred by a analyser 305 (of the kind that is described above) as sustained ground contact.

A perceived advantage of the second kind of sustained ground contact indicator, which deploys a vibrator, is that it potentially provides a stronger and more predictable source of vibrations, which can lead to a more marked change in vibration characteristics as a result of sustained ground contact. A further perceived advantage of the second kind of sustained ground contact indicator is that a failure of a vibration transducer or vibrator would be immediately apparent (in a detectable way) due to a lack of expected received vibrations. In any event, as will be apparent, all facets of the first kind of the sustained ground contact indicator may be combined with the 'driven vibration' feature of the second kind of sustained ground contact indicator to provide an overall enhanced sustained ground contact indicator.

The vibrator 500 may be realised as a standalone package, which is fixedly attached to a bogie beam (or other aircraft part). While the vibrator 500 may be realised as a connected and powered component, it may instead be locally powered or not powered. For instance, the vibrator may be powered by an airflow driven motor or even stimulated to vibrate by an airflow.

It will be appreciated that it may not be sufficient to detect ground contact of a single tyre in order to determine sustained ground contact, especially if the ground contact is a 'bounce' or if only one set of tyres has touched-down. Aircraft control systems 315 according to examples herein may be arranged to assess other factors (for example, signals from multiple bogie beam assemblies and/or respective sustained ground contact indicators and/or WonW detectors) before acting to deploy some or all retardation functions.

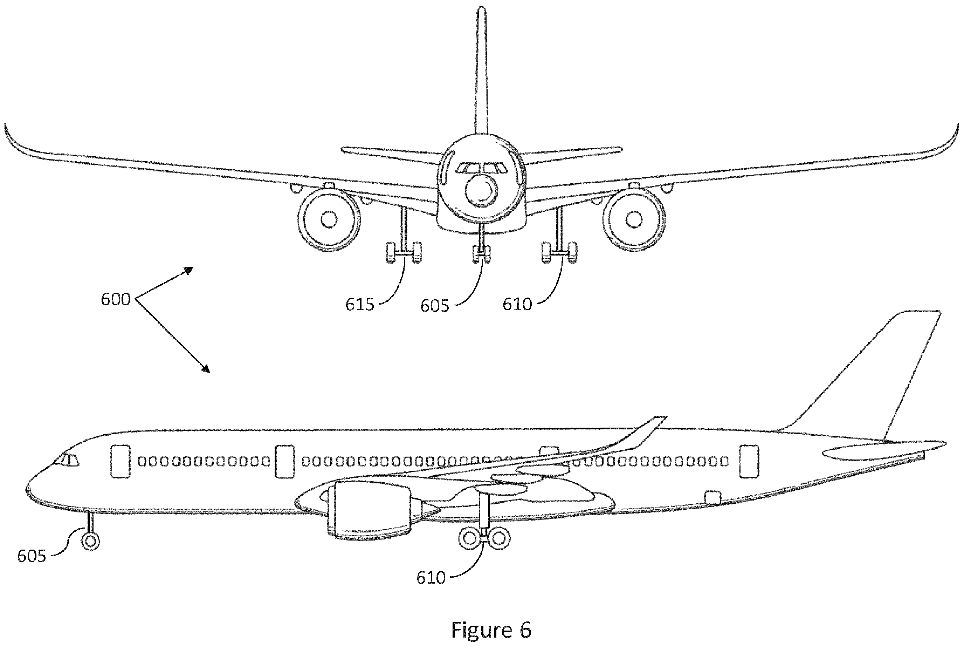

Figure 6 illustrates front and side elevations of an exemplary aircraft 600, illustrating three sets of landing gear assembly: nose 605, main left 610 and main right 615. As can be seen, the rearward, main sets of landing gear assembly each include a bogie beam and two pairs of tyres (of the kind illustrated in Figure 1), while the forward, nose set has no bogie beam and comprises a shock strut arrangement and, attached thereto, an axle carrying a wheel. According to examples herein, a sustained ground contact indicator system comprises plural sustained ground contact indicators of the kind that have been described. In one example, each main landing gear assembly comprises a sustained ground contact indicator. In another example, each main landing gear assembly comprises a sustained ground contact indicator and the nose landing gear assembly also comprises a sustained ground contact indicator. Since the nose landing gear assembly has no bogie beam, the vibration transducer and (if deployed) vibrator may be fixedly attached to the strut arrangement or at another convenient location.

An advantage of a sustained ground contact indicator system that comprises plural sustained ground contact indicators is that an aircraft control system 315 can take into account further indicators of sustained ground contact. For example, it is possible for ground contact to be made by a tyre on one side of the aircraft and not on the other. While the sustained ground contact indicator on the side that exhibits ground contact may determine sustained ground contact, the sustained ground contact indicator on the other side, which has not experienced ground contact, would not determine ground contact. In such a case, the aircraft control system 315 may deploy retardation functions that are suitable for that kind of partial ground contact. For instance, certain retardation functions, such as wheel brakes, may not be deployed until both sustained ground contact indicators signalled sustained ground contact.

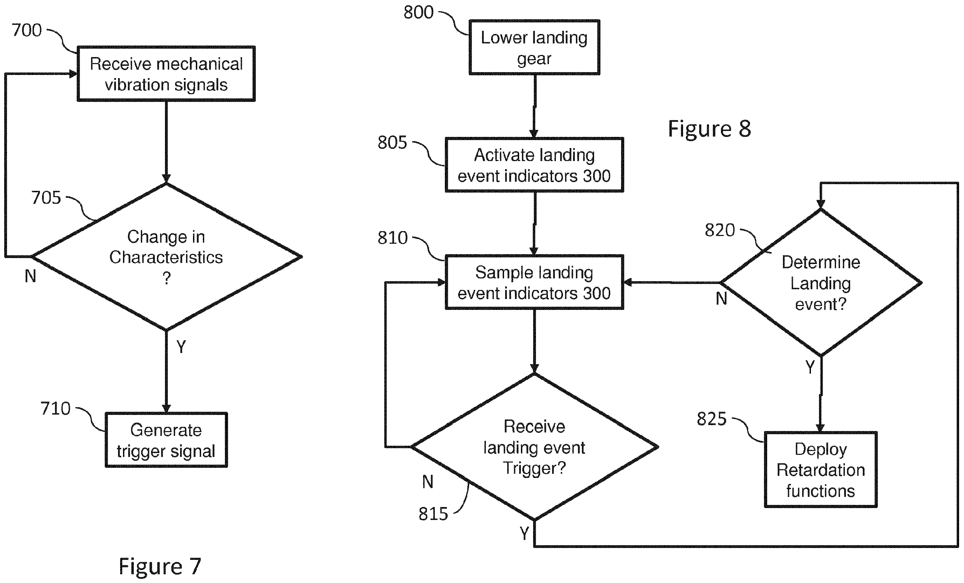

The flow diagram in Figure 7 illustrates steps involved in determining sustained ground contact, for example, by a sustained ground contact indicator 300 of the kind that has been described herein. In a first step, 700, the sustained ground contact indicator 300 receives signals indicative of mechanical vibration characteristics of an aircraft. In a next step 705 the sustained ground contact indicator 300 determines whether there has been a change in the mechanical vibration characteristics that is indicative of sustained ground contact and loops back to step 700 if not. If a change in the mechanical vibration characteristics is determined, in a next step, 710, the sustained ground contact trigger 300 generates a trigger signal indicative of a determined sustained ground contact.

The flow diagram in Figure 8 illustrates steps involved in determining sustained ground contact and deploying aircraft retardation functions. In a first step 800 at an appropriate time on approach to a runway landing gear assemblies are lowered. Sustained ground contact indicators 300 are activated, for example, in response to an altimeter indicating that the aircraft is within a predetermined height of the runway, in step 805. The aircraft control system 315 then samples inputs in step 810 from various sustained ground contact indicators 300, and, in particular, the aircraft control system 315 awaits inputs from one or more sustained ground contact triggers 310 in step 815. Such a trigger may arise according to step 710. While no inputs are received the process loops back to step 810. In response to receipt of one or more trigger signals, in step 820, the aircraft control system 315 determines whether or not sustained ground contact for the aircraft has occurred. For instance, as has been described, a signal from one sustained ground contact trigger 310 associated with one bogie beam may not lead to determination of sustained ground contact for the aircraft whereas a signal from each main sustained ground contact trigger 310 may lead to a determination that sustained ground contact for the aircraft has occurred. If sustained ground contact for the aircraft is not determined the process loops back to step 810. In response to a determination that sustained ground contact for the aircraft has occurred, in a next step 825, the aircraft control system 315 deploys appropriate retardation functions in a known way.

Examples herein have illustrated sustained ground contact indicators 300 associated with bogie beam assemblies forming part of main landing gear assemblies and with shock struts forming part of nose landing gear assemblies. Nevertheless, sustained ground contact indicators 300 may instead be associated with or attached to any part of an aircraft, without limitation, from which a change in vibration characteristics due to ground contact and in particular sustained ground contact can be detected. In particular, the principles taught herein are expected to apply to any arrangements of landing gear assembly either including or excluding a bogie beam. For example, the landing gear assembly may be a multi (for example, twin) wheel main landing gear assembly without a bogie beam, or a multiple axle bogie with plural (for example, six) wheels and multiple kinematics.

## Claims

1. A method comprising determining sustained ground contact of an aircraft by detecting a change in a mechanical vibration characteristic of a part of the aircraft.

2. A method according to claim 1 comprising triggering a sustained ground contact indicator when sustained ground contact is determined.

3. A method according to either preceding claim, wherein the part comprises a landing gear assembly element, for example a bogie beam assembly.

4. A method according to any one of the preceding claims, comprising stimulating vibrations of the part, for example, prior to and during a landing event, for example, wherein a vibrator stimulates vibrations in the part.

5. A method according to any one of the preceding claims, wherein a vibration transducer detects mechanical vibration characteristics of the part.

6. A method according to any one of the preceding claims comprising analysing the frequency domain characteristics and/or the time domain characteristics of the mechanical vibration characteristic to determine sustained ground contact.

7. A method of deploying aircraft retardation functions comprising determining sustained ground contact of an aircraft according to any one of the preceding claims and, in response, deploying aircraft retardation functions.

8. Apparatus for determining sustained ground contact of an aircraft, which is arranged to detect a change in a mechanical vibration characteristic of a part of the aircraft.

9. Apparatus according to claim 8, comprising a vibration transducer to generate signals representing mechanical vibrations of the part, an analyser to determine from the signals a change in mechanical vibration characteristics and a trigger responsive to an output of the analyser to trigger when a sustained ground contact has occurred.

10. Apparatus according to claim 8 or claim 9, wherein the vibration transducer is fixedly attached to the part and is arranged to produce signals representative of vibrations of the part.

11. Apparatus according to any one of claims 8 to 10, comprising a vibrator, which is arranged to drive mechanical vibrations of the part.

12. Apparatus according to any one of claims 8 to 11, wherein the part comprises a landing gear assembly element, for example, a bogie beam assembly.

13. An aircraft control system, arranged to determine sustained ground contact of a respective aircraft, the system comprising, or arranged to receive inputs from, at least one apparatus according to any one of claims 8 to 12.

14. An aircraft comprising an apparatus as claimed in any one of claims 8 to 12 or a system according to claim 13.

15. An aircraft arranged to perform a method according to any one of claims 1 to 7.
